# EUROPEAN PATENT APPLICATION

(11) **EP 1 327 823 A2**
(43) Date of publication of application: **16.07.2003**
(21) Application number: 03250078.7
(22) Date of filing: 07.01.2003
(51) Int. Cl.: F23L 7/00, F23C 9/00, C01B 13/02, B01D 53/04

(54) **Oxy-fuel combustion process**

(30) Priority: 08.01.2002 US 346597 P; 08.01.2002 US 346582 P; 10.01.2002 US 347268 P; 06.12.2002 US 313876
(71) Applicant: THE BOC GROUP, INC., Murray Hill, New Providence, New Jersey 07974-2082 (US)
(72) Inventor: Zeng, Yongxian, North Plainfield NJ 07060 (US); ACHARYA, Divyanshu Rasiklal, Bridgewater, NJ 08807 (US); TAMHANKAR, Satish Shankar, Scotch Plains, NJ 07076 (US); RAMPRASAD, Narayanan, Hillsborough, NJ 08844 (US); RAMACHANDRAN, Ramakrishnan, Allendale, NJ 07401 (US); FITCH, Frank Roger, Bedminster, NL 07921 (US); MACLEAN, Donald Lewis, Clinton, NJ 08809 (US); LIN, Yue-Sheng, Cincinnati, OH 45243 (US); CLARKE, Richard Henry, Abingdon OX1 42NQ (GB)
(74) Representative: Wickham, Michael

(57) **Abstract**

A method for producing oxygen-enriched gas for use in a combustion zone comprising the steps:
(a) feeding air to a retention system that utilises a particulate, high temperature oxygen-selective adsorbent material to adsorb oxygen from the air;
(b) retaining oxygen from said air onto the said particulate, high temperature, oxygen-selective adsorbent material;
(c) removing nitrogen from the said retention system;
(d) feeding oxygen-enriched gas from the said retention system to said combustion zone;
(e) combusting a fuel gas in the presence of said oxygen-enriched gas; and
(f) continually feeding the exhaust gas from said combustion zone to said retention system to form the oxygen-enriched gas by desorption of oxygen into the exhaust gas.

Instead of step (f), steam may be used to form the oxygen-enriched gas by desorption of oxygen from the adsorbent material.

## Description

### BACKGROUND OF THE INVENTION

This invention relates to a method of combustion that uses an oxygen-rich gas to support the combustion and to a method of producing oxygen-rich gas.

The primary purpose of combustion processes is typically to generate heat. In a power plant or in an industrial boiler system, the heat is utilized to generate high pressure steam which in turn may be used to provide process heating or may be used to produce electricity. Most conventional combustion processes utilize air as a source of oxygen. The presence of nitrogen in air does not benefit the combustion process and may even create problems. For example, nitrogen will react with oxygen at combustion temperatures forming nitrogen oxides (NOx), an undesirable pollutant. In many cases, the products of combustion must be treated to reduce nitrogen oxide emissions below environmentally acceptable limits. Moreover, the presence of nitrogen increases the flue gas volume which in turn increases the heat losses and decreases the thermal efficiency of the combustion process. Additionally, high nitrogen content in the flue gas may make it unattractive to capture CO₂ either as a product or for sequestration. With the current emphasis on CO₂ sequestration to alleviate harmful effects of global warming, it is critical to develop processes which will enable CO₂ capture in a cost effective way.

One way to eliminate nitrogen from the combustion exhaust or flue gas is to use pure oxygen in the combustion process instead of air. However, combustion with oxygen generates very high temperatures and therefore some of the flue gas produced typically needs to be recycled to moderate temperatures. This in turn typically dilutes the oxygen content to about 27% (remaining ∼ 73% is CO₂ and water) if the flame temperature is maintained at the same value. While such a scheme would eliminate the problems associated with nitrogen, the cost of oxygen at present is too high to make it generally economically attractive.

Production of an oxygen-enriched gas stream using ion transport ceramic membrane is discussed in US-A-5,888,272 which discloses a process for separating a feed gas stream into an oxygen-enriched gas stream which is used in a combustor and an oxygen-depleted gas stream. The feed gas stream is compressed, and oxygen is separated from the compressed feed gas stream using an ion transport module including an ion transport membrane having a retentate side and a permeate side. The permeate side of the ion transport membrane is purged with at least a portion of a combustion product gas stream obtained from the combustion in the combustor of the gas stream exiting the permeate side of the ion transport module. Disadvantages of this method of oxygen production are the high cost of fabrication of the membrane and the difficulty in producing membrane structures that are leakproof. Also, oxygen recovery is typically low in membrane units.

The present invention is based on the use of high-temperature, oxygen-selective ceramic materials made in particulate form to produce a substantially nitrogen-free oxygen stream suitable for oxy-fuel application, and may provide an attractive option to reduce oxygen cost. Such systems utilize either pressure swing or temperature swing mode since the oxygen retention capacity of the ceramic material is strongly dependent on temperature and pressure. The process normally operates at temperatures greater than 300°C and offers several advantages, including high oxygen capacity and large oxygen selectivity. A key advantage of this process is that it uses the oxygen-selective material in conventional pellet form in fixed bed reactors, which can be designed using traditional methods. Thus, the process can be commercially adopted more easily compared to the membrane based process mentioned above, which requires special fabrication, sealing and assembly procedures, and is known to have several issues in this regard. An additional advantage of the fixed bed, ceramic-based system is that it can directly produce an oxygen containing stream, substantially free of nitrogen, with the oxygen concentration suitable for oxy-fuel application. This is unlike conventional processes, such as cryogenic air separation method, which first produce high purity oxygen, and require subsequent dilution to get the required oxygen concentration.

The present invention is aimed at reducing the cost of oxygen by producing substantially nitrogen-free oxygen containing stream suitable for combustion processes. It relates to the use of a high-temperature, oxygen generation system to produce an oxygen-containing stream, substantially free of nitrogen. More particularly, it describes the use of an oxygen-selective ceramic material to separate oxygen from an air stream to produce an oxygen containing stream which can be employed in an industrial boiler or fired heater or in other combustion based processes as an oxygen source instead of air.

### SUMMARY OF THE INVENTION

The present invention provides methods as claimed in the appended claims. A method according to the present invention may be used to produce an oxygen stream for use in an industrial boiler or fired heater. A process is described wherein a part of the flue gas from the boiler, primarily containing water vapor and CO₂, is used to sweep a reactor containing oxygen-saturated high temperature oxygen-selective ceramic material (e.g., perovskite) to produce an oxygen-containing stream. The oxygen-containing stream is fed to the boiler along with a fuel, which is burned in the boiler to generate heat. The oxygen-depleted ceramic material is saturated with oxygen by exposing it to air in a cyclic fashion. Therefore, the process for operating the ceramic system consists of at least two steps in each cycle of the cyclic operation. In the first step, an air stream is introduced into the reactor containing the high temperature oxygen-selective ceramic material, which selectively retains oxygen. In the second step, a portion of the flue gas from the boiler is fed into the reactor to purge out at least a part of the oxygen from the ceramic material, so that the material becomes oxygen-depleted. The oxygen retention step is exothermic while the oxygen removal step is endothermic. The overall process is thermo-neutral, in principle; however, some heat loss will occur, which needs to be compensated.

In one embodiment of the process, the boiler is operated under slightly under-oxidized (substoichiometric) conditions, so that the flue gas contains no oxygen, but contains a small amount of CO and H₂. The CO + H₂ is burned in the reactor with a portion of the oxygen retained in the ceramic material to generate heat required to sustain the cyclic operation of the reactor.

In another embodiment of the process, the boiler is operated under conditions such that the fuel is completely burned, and a small amount of excess O₂ is present in the flue gas (typically ∼0.5 - 5.0 vol. %). In this case, the recycled flue gas is fed to the reactor along with the addition of a small amount of suitable fuel (CO, H₂, CH₄, etc. or a combination thereof), in the amount at least sufficient to react with the excess oxygen present in the flue gas. The combustion catalyst may be combined with the oxygen-selective ceramic material in the same reactor, as a layer at the entrance. Also, a layer of perovskite can act as a combustion catalyst. This combustion generates heat necessary for the cyclic process. The amount of fuel gas added is adjusted so as to generate sufficient heat. Any excess fuel added reacts with the oxygen stored in the ceramic material. If higher temperature results due to the combustion, it helps extract more oxygen from the ceramic material since the amount of oxygen retained in the ceramic material generally decreases with increasing temperature.

Optionally the flue gas can be passed through an additional reactor to which a controlled amount of fuel gas is added. The reactor may contain a catalyst, such as a supported noble metal catalyst. The oxygen is consumed in this reactor by reaction with the added fuel. As described above, a portion of the resulting gas, after heat recovery, is then fed to the reactor for generating the oxygen-containing gas stream.

If high temperature valves are used, the hot flue gas from the boiler can be fed directly into the reactor. When low temperature valves are used, the hot flue gas from the boiler is first passed through a heat exchanger to recover the heat and to generate steam as a useful product, before it is fed to the reactor. The portion of the flue gas, which is not recycled may be used to capture CO2 from it after separating water and other impurities.

In another embodiment of the process, the oxygen-containing gas leaving the reactor is cooled to separate the water in the stream by condensation, thereby increasing the concentration of oxygen in the stream returning to the boiler. The increased oxygen concentration may provide more flexibility in the operation of the boiler.

### BRIEF DESCRIPTION OF THE DRAWINGS

Methods according to the invention will now be described by way of example with reference to the accompanying drawings, in which:
Figure 1 is a schematic representation of a boiler and the ceramic oxygen generation system as practiced by the present invention;
Figure 2 is a schematic representation of the ceramic oxygen generation system for oxyfuel application as practiced in the present invention;
Figure 3 is a schematic representation of a ceramic oxygen generation system with steam purge as practiced in the present invention; and
Figure 4 is a schematic representation of ceramic oxygen generation reactor showing the layer arrangement.

### DETAILED DESCRIPTION OF THE PREFERRED EMBODIMENTS

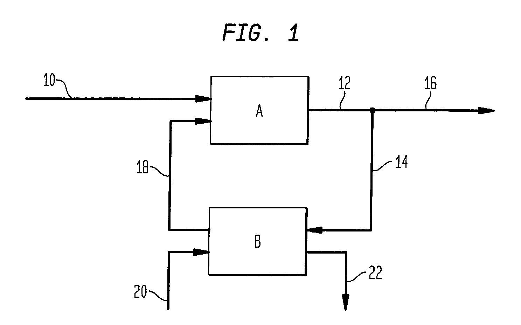

Figure 1 is a schematic embodiment of a boiler or fired heater and an oxygen generation ceramic system B. Contained therein in B is the oxygen-selective ceramic material. Line 10 carries fuel gas to the boiler A. The fuel can be selected from the group consisting of CH₄, H₂, CO, C₂H₄, C₂H₆ and mixtures thereof or can be coal, char or other solids as well as various refinery waste streams, fuel oils, etc. or any suitable combustible material. The combustion exhaust gas or flue gas, which consists primarily of carbon dioxide and water vapor, exits combustion/heat recovery zone A through line 12. A part of the combustion exhaust gas is directed through line 14 to the oxygen generation system B. Compressed air enters the oxygen generation system through line 20. Oxygen lean stream containing mainly nitrogen, up to 98%, exits the oxygen generation system through line 22. Oxygen from the air is retained onto the oxygen-selective ceramic material. The combustion exhaust gas enters the system B, removes this oxygen and regenerates the ceramic material. The gas leaves through line 18 as substantially nitrogen-free oxygen rich gas and enters the boiler A whereby combustion can occur anew.

The ceramic system primarily comprises at least two reactors filled with high temperature oxygen-selective ceramic material, such as perovskite material, and an inert ceramic material for internal heat exchange, optional multi-pass heat exchangers and switchover valves. The process is cyclic and may be compared to a pressure swing retention process. Air is passed into first bed where oxygen is preferentially retained onto the material and oxygen lean stream is withdrawn from the top of the bed. Once the material becomes at least in part saturated with oxygen, the operation is transferred to another vessel. The first bed is now purged with the combustion exhaust gas or recycled flue gas, which removes at least part of the oxygen and as a result also regenerates the material. A minimum of two reactors are operated to ensure continuous operation.

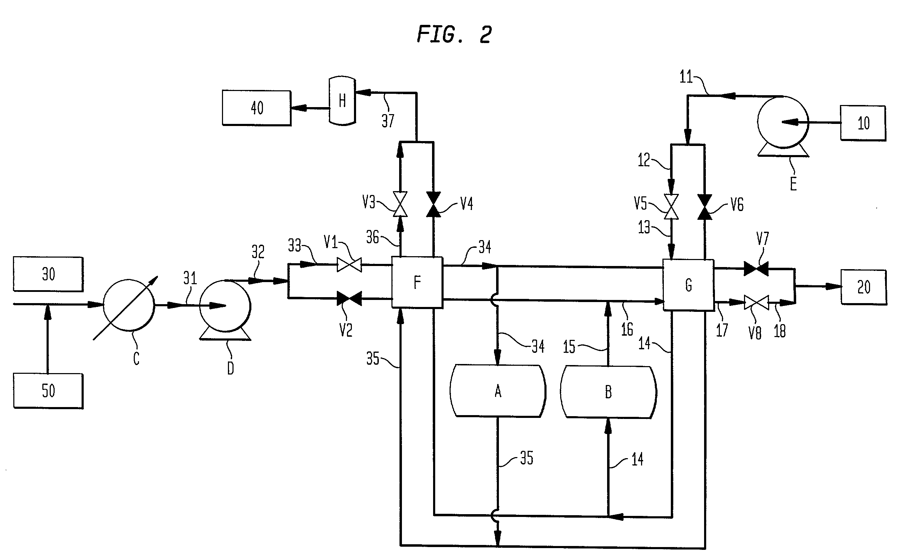

Referring now to Figure 2, air is compressed, and, after passing through multi-pass heat exchanger, will pass through one of the beds, which contains high temperature oxygen-selective ceramic material, such as perovskite material. Oxygen will be retained on the perovskite and nitrogen will leave the bed as effluent. This effluent gas stream will then pass up again through one of the multi-pass heat exchangers and will leave the cyclic system. While one bed is undergoing the air step, the second perovskite bed which is already partially saturated with oxygen is purged with the recycled flue gas stream. Like air, the recycled flue gas also passes through a multi-pass heat exchanger before passing through the perovskite bed. As the recycled flue gas passes through the bed, it picks up the oxygen stored on the perovskite and also regenerates the perovskite. The oxygen rich gas then leaves the bed through the multi-pass exchanger, exchanging heat with the incoming recycled flue gas.

Figure 2 is now described here with bed B receiving air and bed A recycled flue gas. Air is first compressed to the desired pressure using air blower E. The compressed air is fed through lines 11 and 12, valve V5 and line 13 to the multi-pass heat exchanger G. Valve V6 is closed during this step. Air is heated in exchanger G by exchanging heat with the returning oxygen-lean stream 16. The heated air, 14, is fed to the perovskite bed B. The oxygen-lean stream, 15, exits bed B, exchanges heat with incoming air in exchanger G and then leaves the system through line 17, valve V8 and line 18 as stream 20.

Recycled flue gas 30 from the boiler system and, if necessary, additional fuel 50 are cooled in cooler C, fed through line 31 and compressed in blower D. The compressed gas flows via lines 32 and 33 through valve V1 into a multipass heat exchanger F in which it is raised to elevated temperature. The thus heated gas stream passes through line 34 to a bed A of perovskite adsorbent that has previously been saturated with oxygen. Passage of the heated gas stream through the bed A causes oxygen to be desorbed. An oxygen rich stream leaves the bed A from the bottom, passes from line 35 through the heat exchanger F. Passage of the oxygen rich stream through the heat exchanger F causes it to heat the recycled flue gas stream. The oxygen rich stream flows from the heat exchanger F through line 36, valve V3 and line 37 and into a buffer tank H.

A typical valve sequence is given in the table below:

| Step | Duration | Bed A | Bed B | Valves | | | | | | | |
|---|---|---|---|---|---|---|---|---|---|---|---|
| | Sec | Feed | Feed | V1 | V2 | V3 | V4 | V5 | V6 | V7 | V8 |
| 1 | 30 | Air | Flue Gas | open | close | open | Close | open | Close | open | Close |
| 2 | 30 | Flue Gas | Air | close | open | close | Open | close | Open | close | Open |

Oxygen-rich gas stream 40 is withdrawn from the buffer tank 40.

The present invention can be integrated with a boiler or fired heater in several ways with an objective of improving the efficiency. In one embodiment of this process, the boiler is operated under slightly under-oxidized (substoichiometric combustion) conditions so that the flue gas contains no oxygen but contains a small amount of carbon monoxide and hydrogen. The carbon monoxide and hydrogen are burned in the perovskite reactor to generate heat required to sustain and improve the cyclical operation of the perovskite reactor.

Alternatively, the boiler is operated under conditions such that the fuel is completely burned and a small amount of excess oxygen is present in the flue gas, typically about 0.5 volume %. In this case, the recycle flue gas is fed to the perovskite reactor along with the addition of a small amount of a suitable fuel such as carbon monoxide, hydrogen, methane or a combination thereof in an amount at least sufficient to react with the excess oxygen present in the flue gas (stream 50 in Figure 2). This combustion generates heat necessary for the cyclical process. The amount of fuel gas added is adjusted so as to generate sufficient heat. Any excess fuel added reacts with the oxygen stored on the perovskite. If higher temperature results due to the combustion, it helps extract more oxygen from the perovskite.

In a further alternative, the boiler is operated under conditions of excess oxygen to assure complete combustion of all the fuel. In this case, the flue gas can contain up to 5% by volume oxygen. This flue gas is passed through an optional reactor to which a controlled amount of fuel gas as described above is added. The reactor may contain a catalyst such as a supported noble metal catalyst. The oxygen is consumed in this reactor by a reaction with the added fuel gas. As described above, a portion of the resulting gas after heat recovery is then fed to the perovskite reactor A or B for generating the oxygen-containing gas stream. The combustion catalyst can be separate or may be combined with the perovskite in the same reactor, as a layer at the entrance to the reactor. Also, a layer of perovskite can act as a combustion catalyst.

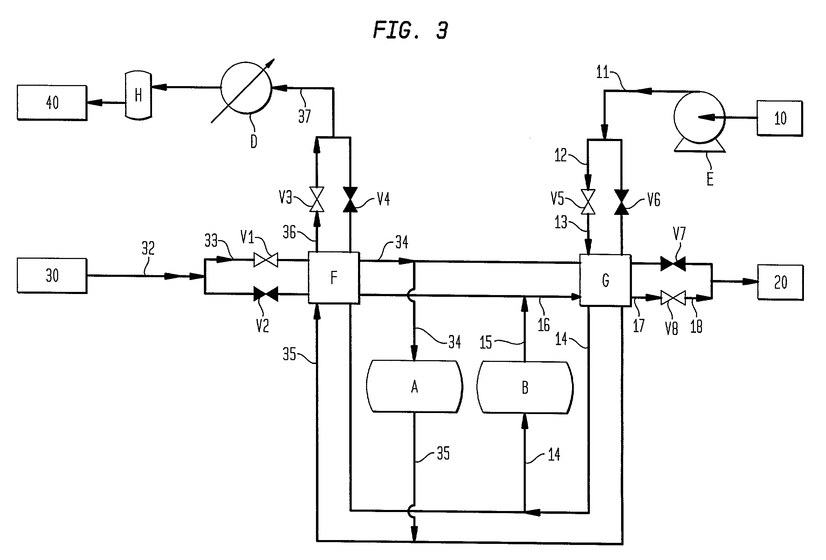

If desired, the oxygen-containing gas leaving the perovskite reactor A or B is cooled to separate the water in the stream as condensate thereby increasing the concentration of oxygen in the stream returning to the boiler. The increased oxygen concentration may be beneficial to the boiler operation and may provide more flexibility to the operation of the boiler. An extension of this scheme is to use steam as the sole regeneration gas as shown in Figure 3. The configuration and operation of the plant shown in Figure 3 are similar to those of the plant shown in Figure 2 and like parts are indicated by the same reference numerals in the two Figures. As mentioned above, the regeneration gas in operation of the plant shown in Figure 3 is steam and not flue gas. A further difference is that a condenser D1 is employed in line 37 of Figure 3 to remove water vapour from the oxygen-rich stream upstream of the buffer H. The main advantage of this scheme is that oxygen can be produced in any concentration by cooling the oxygen-rich stream and condensing the steam out. Since the process still operates at low pressure, only low-pressure steam is necessary. The availability of low-pressure steam is usually not a problem as schemes presented here are integrated as part of an overall boiler or power plant.

In one embodiment, water is removed from the recycled flue gas before it enters the ceramic oxygen generation system so that it consists of mainly CO₂. It has been discovered that when the purge gas in the oxygen extraction step is CO₂, the amount of oxygen recovered from the ceramic bed is higher compared to other gases such as N₂ or steam. This is believed to be due to exothermic retention of CO₂ on the ceramic material leading to greater oxygen release.

The schemes presented in Figures 2 and 3 are based on partial pressure swing process i.e. the driving force for extraction of stored oxygen is provided by the difference in partial pressure of oxygen between the oxygen retention and extraction steps. The pressure to which the air is compressed is mainly determined by the required concentration of oxygen in the oxygen-rich stream. According to the invention, air is fed at a pressure of 15-400 psia, preferably 15-100 psia, and more preferably 20 - 40 psia, and the recycled flue gas at 0.1 - 200 psia, preferably 8-50 psia, and more preferably 10--30 psia, so that the pressure difference between the two streams at the entrance to the reactor is maintained between 5 and 20 psi.

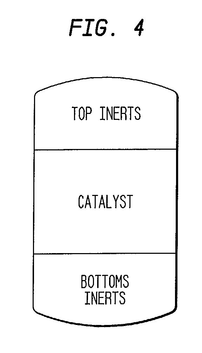

The schemes presented here relate to the concepts employed in ensuring efficient heat management. For example, one aspect of the invention provides for the use of inert ceramic materials for regenerative heat transfer in cyclic catalytic processes. The configuration of reactors A and B shown in Figures 2 and 3 with inert materials is shown in Figure 4. In particular, such regenerative heat transfer is used in conjunction with at least one external heat exchanger to achieve the desired heat transfer for the overall process. Through heat exchange with these inert ceramic materials, temperatures of hot gas streams exiting a reactor can be significantly reduced, e.g., to below about 900°C, and preferably as low as about 500°C. Such a reduced gas stream temperature allows use of low-cost construction materials, and results in corresponding cost reduction, as well as an increased operating life of the external heat exchanger required for additional heat transfer.

While such a heat transfer scheme is generally applicable to any cyclic process, it is particularly well-suited for processes with relatively high operating temperatures, e.g., about 250°C or higher, where the unavailability of switchover valves for high temperature operation necessitates that all hot gas streams be effectively cooled so that standard valves can be employed. Furthermore, it is also well-suited to cyclic processes with relatively short cycle times, such as those in which the heating and cooling times are below about a minute, e.g., between about 15 to about 60 seconds.

As shown in Figures 2 and 3, multi-pass compact heat exchangers F and G are used to carry out supplemental heat transfer from hot gas streams. Both of the heat exchangers F and G may include two external heat exchangers, which operate on cyclic duty in synchronization with the cyclic operation of the reactors. The heat exchange is further complemented with the internal regenerative heat exchange using inert layers of ceramic material. The external heat exchangers allow heat exchange between the inlet and outlet of the same streams, for example air and waste nitrogen stream or recycled flue gas and oxygen-rich streams. On the other hand, internal regenerative heat exchange allows heat exchange between two different streams, for example air and oxygen rich stream and waste nitrogen and recycled flue gas. This heat exchange practice also allows the use of low temperature switchover valves and enhances the reliability of the cyclic process.

The multi-pass exchangers, which are a part of the compact heat exchanger family, offer significant thermal advantages over conventional shell and tube exchangers. They are available commercially and may be employed for pressures as high as 2000 bar and temperatures as high as 800°C. A detailed review of compact heat exchangers can be found in an article by V.V. Wadekar, in CEP, December 2000, which is herein incorporated by reference. For high temperature applications, these heat exchangers are typically fabricated from stainless steel or other alloys.

While multi-pass exchangers are integral part of the schemes presented here, it may also be possible to adjust process parameters to complete all heat exchange using inert materials placed inside the reactor. This will eliminate the need for external heat exchange. On the other hand, it is also possible to carry out all heat exchange in heat exchangers thereby eliminating the need for inert layers within the reactor vessels.

One characteristic of cyclic processes is the possibility of contamination of the desired product stream with impurities as a result of vessel voids. For the present case, this means that the oxygen rich stream may get contaminated with nitrogen present in the voids at the end of the oxygen retention step. In order to avoid this, an additional step may be introduced. In this step the reactor will be rinsed with steam after the oxygen retention step. This will remove any nitrogen that may be present in the voids. The reactor now can be purged with the combustion exhaust gas or flue gas.

The oxygen-selective ceramic materials are typically oxygen-selective mixed conductors, which exhibit both high electronic and oxygen ionic conductivities at elevated temperature. Examples of these mixed conductors are perovskite-type oxides, CeO₂-based oxides, Bi₂O₃-based oxides, ZrO₂-based oxides, and brownmillerite oxides. In order to further enhance its electronic conductivity and catalytic activity for oxygen ionization, some metal phase can be added into the ceramic material to form a ceramic-metal composite. The metals can be selected from Cu, Ni, Fe, Pt, Pd, Rh and Ag.

In general, the oxygen-selective ceramic materials retain oxygen through conduction of oxygen ions and filling up the oxygen vacancies in its bulk phase. The oxygen retention capacity usually increases with increasing oxygen partial pressure and decreasing temperature. Therefore, the retention and release of oxygen into and from the ceramic material during retention and release steps perform efficiently in that the oxygen partial pressure during the retention step is much higher than that in the release step.

In a preferred embodiment, the at least one oxygen-selective ceramic material comprises an oxygen-selective mixed ionic and electronic conductor. In a more preferred embodiment, the oxygen-selective ceramic material comprises a perovskite-type ceramic having the structural formula A₁₋ₓMₓBO_{3-δ}, where A is an ion of a metal of Groups 3a and 3b of the periodic table of elements or mixtures thereof; M is an ion of a metal of Groups 1a and 2a of the periodic table or mixtures thereof; B is an ion of a d-block transition metal of the periodic table or mixtures thereof; x is a fraction between 0 and 1; and δ is the deviation from stoichiometric composition resulting from the substitution of ions of metals of M for ions of metals of A.

In a more preferred embodiment, the at least one oxygen-selective ceramic material is a perovskite-type ceramic and x varies from about 0.1 to 1.

In another more preferred embodiment, the at least one oxygen-selective ceramic material is a perovskite-type ceramic and A is one or more f-block lanthanides. In a more preferred embodiment, A is La, Y, Sm or mixtures thereof.

In another more preferred embodiment, the at least one oxygen-selective ceramic material is a perovskite-type ceramic and M is at least one metal of Group 2a of the periodic table of elements. In a more preferred embodiment M is Sr, Ca, Ba or mixtures thereof.

In another more preferred embodiment, the at least one oxygen-selective ceramic material is a perovskite-type ceramic and B is Ti, V, Cr, Mn, Fe, Co, Ni, Cu, Zn or mixtures thereof. In a more preferred embodiment, B is V, Fe, Ni, Cu or mixtures thereof.

In another more preferred embodiment, the at least one oxygen-selective ceramic material is a perovskite-type ceramic and x is about 0.2 to 1.

In another more preferred embodiment, the at least one oxygen-selective ceramic material is a perovskite-type ceramic and A is La, Y, Sm or mixtures thereof, M is Sr, Ca or mixtures thereof, and B is V, Fe, Ni, Cu or mixtures thereof.

In another embodiment, the at least one oxygen-selective ceramic material conductor is a member selected from the group consisting of (1) ceramic substances selected from the group consisting of Bi₂O₃, ZrO₂, CeO₂, ThO₂, HfO₂ and mixtures thereof, the ceramic substances being doped with CaO, rare earth metal oxides or mixtures of these; (2) brownmillerite oxides; and (3) mixtures of these.

In another embodiment, the at least one oxygen-selective ceramic material conductor is at least one ceramic substance selected from the group consisting of Bi₂O₃, ZrO₂, CeO₂, ThO₂, HfO₂ and mixtures of these, and the at least one ceramic substance is doped with a rare earth metal oxide selected from the group consisting of Y₂O₃, Nb₂O₃, Sm₂O₃, Gd₂O₃ and mixtures of these.

### Examples

### Example 1. Preparation of La_{0.2}Sr_{0.8}Co_{0.6}Fe_{0.4}O_{3-δ} perovskite powder

The powder of perovskite-type oxide was prepared first by mixing of corresponding metal oxides or hydroxides and then repeated steps of sintering, ball-milling and filtration for three times. The temperatures in 3 sintering steps were, respectively, 900 °C, 950 °C and 1000 °C, and the sintering time was 8 hours. The first sintering was conducted right after dry-mixing of La₂O₃, Sr(OH)₂·8H₂O, Ni₂O₃, Co₂O₃ and Fe₂O₃. The ball milling of the material was carried out with grinding media and water after each sintering. The solid was collected by filtration after ball milling. The filtration cake was dried at 100 °C for overnight before it was subjected to the next sintering. After the last ball-milling, the dried filtration cake was crushed and ground into fine powder. The final powder had a perovskite-type phase structure.

### Example 2. Fabrication of La_{0.2}Sr_{0.8}Co_{0.6}Fe_{0.4}O_{3-δ} perovskite extrudates

The perovskite-type oxide powder made in Example 1 was transformed into a slurry after addition of about 5 wt % hydroxyethyl cellulose and 14.5 wt % water. Thus obtained slurry was aged overnight before it was loaded into an extruder and transformed into extrudates (3 mm in diameter and 4 mm in length). The extrudates were dried in an oven at 90 °C for about 2 hr, and then calcined at 600 °C for 5 hr. The extrudates were finally sintered at 1050 °C for 8 h. The final extrudates were porous and mechanically strong.

### Example 3.

The extrudates made in Example 2 were packed in a tubular reactor made of high temperature metal alloy. The reactor was designed in such a way that the gas streams of air, CO₂ and steam could be fed into the reactor from either the top end or the bottom end of the reactor as required. Mass flow controllers controlled the flow rates of the gas streams. The reactor temperature and valves were controlled with a programmable logic controller (PLC). The product and waste streams during purge and retention steps were collected in a tank, and their average compositions were analyzed with a gas analyzer and a gas chromatograph (GC). In the experiment, the reactor temperature was controlled at 825 °C. An air stream at 7.6 slpm and a CO₂ stream at 4.7 slpm were alternately fed into the reactor for every 30 seconds in a counter-current fashion. The reactor pressures were kept at 23.7 psia and 18.7 psia respectively during air and CO₂ steps. During the last 2 seconds of the air step, the reactor pressure decreased from 23.7 psia to 18.7 psia. The average product composition during CO₂ step was by volume: 27.8% O₂, 67.1% CO2 and 7.4% N2, while the waste stream generated during air step contained 2.3% O2, 12.5% CO2 and 83.5% N2. This demonstrates that an oxygen-rich stream containing primarily CO2 and O2 can be produced with the process disclosed in this invention

### Example 4.

In this experiment, an air stream at 7.6 slpm and a stream of CO₂+steam mixture at 4.5 slpm were alternately fed into the reactor described in Example 3 for every 30 seconds in a counter-current fashion. The reactor pressures were kept at 23.7 psia and 18.7 psia respectively during air and CO₂+steam steps. The average product composition by volume (on a dry basis) during CO₂+steam step was : 40.8% O₂, 44.5% CO2 and 14.7% N2, while the waste stream generated during air step contained 3.7% O2, 11.4% CO2 and 84.9% N2. This result indicates that an oxygen-rich stream can be produced with a mixture of CO2 and steam as purge gas using the process disclosed in this invention.

### Example 5.

In this experiment, an air stream at 7.6 slpm and a stream of steam at 6.2 slpm (standard litres per minute) were alternately fed into the reactor described in Example 3 for every 30 seconds in a counter-current fashion. The reactor pressures were kept at 23.7 psia and 18.7 psia respectively during air and steam steps. The average product composition (on a dry basis) during steam step was by volume: 70.4% O₂, 29.6% N2, while the waste stream generated during air step contained 0.3% O2 and 99.7% N2 (with trace amount other non-oxygen gases). This result showed that an oxygen-rich stream can be produced with stream as purge gas using the process disclosed in this invention.

**Table 1**

| Summary of the results in Examples 3-5 | | | | | | | | | | |
|---|---|---|---|---|---|---|---|---|---|---|
| Example # | | Product | | | | | Waste Stream | | | |
| | | Flow | O₂% | CO₂ % | H₂O% | N₂% | Flow | O₂% | CO₂% | N₂% |
| 3 | Dry | 5.36 | 27.8 | 67.1 | 0 | 7.4 | 7.02 | 2.3 | 12.5 | 83.4 |
| | wet | 5.36 | 27.8 | 67.1 | 0 | 7.4 | 7.02 | 2.3 | 12.5 | 83.4 |
| 4 | Dry | 3.82 | 40.8 | 44.5 | 0 | 14.7 | 5.75 | 3.7 | 11.4 | 84.9 |
| | wet | 6.06 | 25.7 | 28.1 | 37.0 | 9.3 | 5.75 | 3.7 | 11.4 | 84.9 |
| 5 | Dry | 3.37 | 70.3 | 0 | 0 | 29.6 | 6.99 | 0.3 | 0 | 99.7 |
| | wet | 9.59 | 24.7 | 0 | 64.9 | 10.4 | 6.99 | 0.3 | 0 | 99.7 |

Table 1 summarizes the results in Examples 3-5 and compares the product compositions on the wet basis, i.e. including the steam in the product stream. As shown, O₂ concentration in the product on the wet basis increases with increasing CO₂ concentration in the purge gas, indicating that CO₂ has stronger regeneration capability than steam. As noted in the examples, there was some amount of nitrogen still presented in the product stream due to the void space in the reactor. This nitrogen can be easily eliminated from the void space by an additional step between the air and the purge gas steps.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit and scope of the present invention.

## Claims

1. A method of combusting a fuel gas in a combustion zone comprising the steps of:
(a) feeding into said combustion zone said fuel gas;
(b) feeding into said combustion zone an oxygen-enriched gas from an oxygen retention system that utilises a particulate, high temperature, oxygen-selective adsorbent material to adsorb oxygen from air;
(c) combusting said fuel gas; and
(d) recovering and recycling the combustion exhaust gas from said combustion zone to said oxygen retention system

2. A method for producing oxygen-enriched gas for use in a combustion zone comprising the steps:
(a) feeding air to a retention system that utilises a particulate, high temperature oxygen-selective adsorbent material to adsorb oxygen from the air;
(b) retaining oxygen from said air onto the said particulate, high temperature, oxygen-selective adsorbent material;
(c) removing nitrogen from the said retention system;
(d) feeding oxygen-enriched gas from the said retention system to said combustion zone;
(e) combusting a fuel gas in the presence of said oxygen-enriched gas; and
(f) continually feeding the exhaust gas from said combustion zone to said retention system to form the oxygen-enriched gas by desorption of oxygen into the exhaust gas.

3. A method as claimed in either claim 1 or 2, wherein CO₂ is recovered from said exhaust gas.

4. A method as claimed in either claim 1 or 2, wherein said oxygen-selective adsorbent is a ceramic adsorbent.

5. A method as claimed in claim 4, wherein said ceramic adsorbent is an oxygen-selective mixed conductor.

6. A method as claimed in claim 5, wherein the said oxygen-selective mixed conductor is a perovskite type ceramic having the structural formula A₁₋ₓMₓBO_{3-δ}. where A is a rare earth ion, M is Sr, Ca, Ba, V or mixtures of these; B is Co, Mn, Cr, Fe or mixtures of these; x is a fraction between 0 and 1; and δ is the deviation from stoichiometric composition.

7. A method as claimed in any one of the preceding claims, wherein said oxygen retention system produces oxygen-enriched gas through a two-step process of retention and purge.

8. A method as claimed in any one of the preceding claims, further comprising recovering heat from said combustion zone.

9. A method as claimed in any one of the preceding claims, wherein the combustion zone is located in a boiler.

10. A method of converting a feed gas to a product gas in a cyclical process comprising the steps:
(a) introducing said feed gas containing an oxidant into a first reactor, wherein said first reactor contains a catalyst contained between inert materials having heat transfer properties disposed at each end of said first reactor, and said first reactor having an opening at both ends wherein at least one heat exchanger with channels is connected to said openings of said first reactor; wherein said first feed gas is preheated by heat transfer with said product gas in said heat exchanger prior to introducing said first feed gas into said first reactor;
(b) withdrawing a first product gas from said first reactor;
(c) introducing a second flow of said feed gas into a second reactor, wherein said second reactor contains a catalyst contained between inert materials disposed at each end of said second reactor and said second reactor having an opening at both ends wherein at least one heat exchanger with channels is connected to said openings of said second reactor; wherein said second feed gas is preheated by heat transfer with said product gas in said heat exchanger prior to introducing said second feed gas into said second reactor;
(d) withdrawing a second product gas from said second reactor;
(e) diverting said first feed gas flow into said! second reactor thereby forming said first product gas and diverting said second feed gas flow into said first reactor thereby forming said second product gas.

11. A method according to claim 2, wherein said step (f) is not employed, but instead steam is introduced into the oxygen retention system so as to desorb oxygen from the adsorbent material into the steam.
